# EUROPEAN PATENT SPECIFICATION

(11) **EP 3 951 953 B1**
(45) Date of publication and mention of the grant of the patent: **20.11.2024**
(21) Application number: 20872186.0
(22) Date of filing: 29.09.2020
(51) Int. Cl.: H01M 4/62, H01M 4/13, H01M 10/052, H01M 4/02, H01M 4/131, H01M 10/0525

(54) **ELECTRODE AND SECONDARY BATTERY INCLUDING SAME**
ELEKTRODE UND SEKUNDÄRBATTERIE, DIE DIESE ELEKTRODE ENTHÄLT
ÉLECTRODE ET BATTERIE SECONDAIRE L'INCLUANT

(30) Priority: 04.10.2019 KR 20190122963
(43) Date of publication of application: 09.02.2022
(60) Divisional application: 24204950.0
(73) Proprietor: LG Energy Solution, Ltd., Seoul 07335 (KR)
(72) Inventor: KIM, Tae Gon, Daejeon 34122 (KR); CHO, Hyung Man, Daejeon 34122 (KR); MOON, Il Jae, Daejeon 34122 (KR); PARK, Sun Wook, Daejeon 34122 (KR); KWAK, Min, Daejeon 34122 (KR)
(74) Representative: Hoffmann Eitle
(86) International application number: PCT/KR2020/013388
(87) International publication number: WO 2021/066554

(56) References cited:
- EP-A1- 2 675 002
- EP-A1- 3 370 279
- CN-A- 107 946 561
- CN-A- 108 878 771
- JP-A- 2013 513 204
- KR-A- 20120 136 102
- KR-A- 20170 049 459
- KR-B1- 101 477 782
- US-A1- 2012 107 683

## Description

### TECHNICAL FIELD

The present invention relates to an electrode and a secondary battery including the same.

### BACKGROUND ART

Demand for batteries as an energy source has been significantly increased as technology development and demand with respect to mobile devices have recently increased, and thus a variety of research on batteries capable of meeting various needs has been carried out. Particularly, as a power source for such devices, research on lithium secondary batteries having excellent life and cycle characteristics as well as high energy density has been actively conducted.

A lithium secondary battery denotes a battery in which a non-aqueous electrolyte containing lithium ions is included in an electrode assembly which includes a positive electrode including a positive electrode active material capable of intercalating/deintercalating the lithium ions, a negative electrode including a negative electrode active material capable of intercalating/deintercalating the lithium ions, and a microporous separator disposed between the positive electrode and the negative electrode.

Meanwhile, since conductivity of the electrode may not be secured only by the electrode active material, resistance of the battery may be excessively high, and thus, the electrode typically additionally includes a conductive agent. Typically, a point-type conductive agent such as carbon black has primarily been used, and a linear conductive agent such as carbon nanotubes and carbon nanofibers has also been used to improve capacity of the battery by further improving the conductivity.

A single-walled carbon nanotube is one of the linear conductive agents, and conductivity in an electrode active material layer is improved due to its thin and elongated shape. Thus, typically, after an electrode slurry was prepared by using a dispersion in which the single-walled carbon nanotubes were completely dispersed to be present as a single strand of single-walled carbon nanotube units, the electrode active material layer was prepared by using the electrode slurry. In the electrode active material layer, the single-walled carbon nanotube units are present as separated in a single strand. However, when charge and discharge of the battery are repeated, the surface of the single-walled carbon nanotube is damaged or the single-walled carbon nanotube is broken, and thus, there is a limitation in that it is difficult to maintain a conductive network in the electrode active material layer. Accordingly, the conductive network is blocked or reduced, and this degrades life characteristics of the battery.

For this, there is a method for using multi-walled carbon nanotubes in order to secure conductivity despite the surface damage of the carbon nanotube. However, the multi-walled carbon nanotubes are cut into an excessively short length during the preparation of dispersion due to the structure which is formed by growing in a node, and thus there is a limitation to improve the conductivity of the electrode.

Therefore, there is a need for a method that a new form of a conductive agent may be introduced to reduce resistance of the electrode, and input/output characteristics, and high-temperature life characteristics of the battery may be improved.

CN 107 946 561 A, EP 3 370 279 A and EP 2 675 002 A disclose lithium secondary battery electrodes comprising an active material and carbon nanotubes.

### DISCLOSURE OF THE INVENTION

### TECHNICAL PROBLEM

An aspect of the present invention provides an electrode which has low resistance and which can improve input/output characteristics and high-temperature life characteristics of a battery.

Another aspect of the present invention provides a secondary battery including the electrode.

### TECHNICAL SOLUTION

According to an aspect of the present invention, there is provided an electrode including an electrode active material layer which comprises an electrode active material and a conductive agent, the conductive agent including multi-walled carbon nanotube units and carbon nanotube structures in which 2 to 5,000 single-walled carbon nanotube units are arranged side by side and bonded to each other in each carbon nanotube structure, wherein the carbon nanotube structures are contained in the electrode active material layer in an amount of 0.01 wt% to 0.5 wt%.

According to another aspect of the present invention, there is provided a secondary battery including the electrode.

### ADVANTAGEOUS EFFECTS

An electrode according to the present invention includes, as a conductive agent, multi-walled carbon nanotube units and carbon nanotube structures in which 2 to 5,000 single-walled carbon nanotube units are bonded to each other, and thus a conductive network may be maintained smoothly even in the process of charging and discharging of a battery. Specifically, the carbon nanotube structures have a form in which a plurality of single-walled carbon nanotube units are bonded side by side, and thus even if charging and discharging of a battery are repeated, the form may be maintained and the conductive network may be maintained smoothly. In addition, the carbon nanotube structures have a long length, and thus contributes to forming a long conductive network, and the multi-walled carbon nanotube units are disposed primarily on the surface of the electrode active material to contribute to forming a short conductive network, and thereby a generally uniform close conductive network may be achieved. Accordingly, resistance of the electrode may be maintained at a low level, and input/output characteristics and high-temperature life characteristics of the battery may be improved.

### BRIEF DESCRIPTION OF THE DRAWINGS

FIG. 1 is SEM photographs of (A) multi-walled carbon nanotubes and (B and C) carbon nanotube structures which are used in Examples of the present invention.
FIG. 2 is TEM photographs and SEM photographs of (A) carbon nanotube structures which are used in Examples of the present invention and (B) single-walled carbon nanotube units which are used in Comparative Examples.
FIG. 3 is SEM photographs of an electrode in Example 1 of the present invention.
FIG. 4 is SEM photographs of an electrode in Comparative Example 2 of the present invention.
FIG. 5 is an SEM photograph of an electrode in Comparative Example 4 of the present invention.

### MODE FOR CARRYING OUT THE INVENTION

Terms or words used in this specification and claims should not be interpreted as being limited to a conventional or dictionary meaning, and should be interpreted based on the principle that the inventor can appropriately define the concept of a term in order to explain the invention in the best ways.

The terminology used herein is for the purpose of describing particular exemplary embodiments only and is not intended to limit the present invention. The terms of a singular form may include plural forms unless the context clearly indicates otherwise.

It will be understood that the terms "include", "comprise", or "have" when used in this specification, specify the presence of stated features, numbers, steps, elements, or combinations thereof, but do not preclude the presence or addition of one or more other features, numbers, steps, elements, or combinations thereof.

In the present specification, the expression "%" denotes wt% unless explicitly stated otherwise.

In the present specification, the expression "specific surface area" is measured by a BET method, wherein, specifically, the specific surface area may be calculated from a nitrogen gas adsorption amount at a liquid nitrogen temperature (77K) using BELSORP-mini II by Bell Japan Inc.

In the present specification, an average particle diameter (D₅₀) may be defined as a particle diameter at a cumulative volume of 50% in a particle size distribution curve. The average particle diameter (D₅₀), for example, may be measured by using a laser diffraction method. The laser diffraction method can generally measure a particle diameter ranging from a submicron level to a few mm and can obtain highly repeatable and high-resolution results.

In the present invention, a single-walled carbon nanotube unit means a tubular unit having a single wall composed of carbon atoms, and a multi-walled carbon nanotube unit means a tubular unit having multi-walls composed of carbon atoms in one tube.

Hereinafter, the present invention will be described in detail.

### Electrode

An electrode according to the present invention includes an electrode active material layer. The electrode may further include a current collector, and in this case, the electrode active material layer may be disposed on one surface or both surfaces of the current collector.

The current collector is not particularly limited as long as the material of the current collector has conductivity without causing adverse chemical changes in the battery, and, for example, copper, stainless steel, aluminum, nickel, titanium, an alloy thereof, the same having a surface treated with carbon, nickel, titanium, silver, or the like, sintered carbon, etc. may be used.

The current collector may typically have a thickness of 3 um to 500 µm, and microscopic irregularities may be formed on the surface of the current collector to improve the adhesion of the electrode active material. In addition, the electrode collector, for example, may be used in various shapes such as that of a film, a sheet, a foil, a net, a porous body, a foam body, a non-woven fabric body, and the like.

The electrode active material layer includes an electrode active material and a conductive agent.

The electrode active material may be a positive electrode active material or a negative electrode active material commonly used in the art, and a type thereof is not particularly limited.

For example, at least one metal such as cobalt, manganese, nickel, or aluminum, and a lithium oxide containing lithium may be used as a positive electrode active material. More particularly, the lithium oxide may include a lithium-manganese-based oxide (e.g., LiMnO₂, LiMn₂O, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-Y1}Mn_{Y1}O₂ (where 0<Y1<1), LiNi_{Z1}Mn_{2-z1}O₄ (where 0<Z1<2), etc.), a lithium-nickel-cobalt-based oxide (e.g., LiNi_{1-Y2}Co_{Y2}O₂ (where 0<Y2<1), etc.), a lithium-manganese-cobalt-based oxide (e.g., LiCo_{1-Y3}Mn_{Y3}O₂ (where 0<Y3<1), LiMn_{2-z2}Co_{z2}O₄ (where 0<Z2<2), etc.), a lithium-nickel-cobalt-manganese-based oxide (e.g., Li(Ni_{P1}Co_{Q1}Mn_{R1})O₂ (where 0<P1<1, 0<Q1<1, 0<R1<1, and P1+Q1+R1=1) or Li(Ni_{P2}Co_{Q2}Mn_{R2})O₄ (where 0<P2<2, 0<Q2<2, 0<R2<2, and P2+Q2+R2=2), etc.), or a lithium-nickel-cobalt-manganese-other metal (M) oxide (e.g., Li(Ni_{R3}Co_{Q3}Mn_{R3}M¹ₛ) O₂ (where M¹ is selected from the group consisting of Al, Cu, Fe, V, Cr, Ti, Zr, Zn, Ta, Nb, Mg, B, W, and Mo, and P3, Q3, R3, and S are atomic fractions of each independent elements, wherein 0<P3<1, 0<Q3<1, 0<R3<1, 0<S<1, and P3+Q3+R3+S=1), etc.), and any one thereof or a compound of two or more thereof may be included.

Meanwhile, the negative electrode active material may include, for example, a carbonaceous material such as artificial graphite, natural graphite, graphitized carbon fibers, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as SiOᵥ(0 < v < 2), SnO₂, a vanadium oxide, and a lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbonaceous material.

The electrode active material may be included in an amount of 70 wt% to 99.5 wt%, preferably, 80 wt% to 99 wt% based on a total weight of the electrode active material layer. When the content of the electrode active material satisfies the above range, excellent energy density, electrode adhesion, and electrical conductivity may be achieved.

### (1) Multi-walled Carbon Nanotube Units

The multi-walled carbon nanotube units are disposed primarily on the surface of the electrode active material to contribute to forming a conductive network between the adjacent electrode active materials. The multi-walled carbon nanotube units are present not in a bundle type, but in a single strand, and are disposed primarily on the surface of the electrode active material.

The multi-walled carbon nanotube units may have an average diameter of 5 nm to 200 nm, particularly 5 nm to 100 nm, and more particularly 5 nm to 50 nm. In the case in which the above range is satisfied, the multi-walled carbon nanotube units may be easily dispersed in the slurry for preparing an electrode, and the conductivity of the electrode may be improved. The average diameter corresponds to an average value of diameters of top 100 multi-walled carbon nanotube units having a large diameter and bottom 100 multi-walled carbon nanotube units having a small diameter in the electrode, which is observed by means of an SEM or TEM.

The multi-walled carbon nanotube units may have a BET specific surface area of 50 m²/g to 500 m²/g, particularly 100 m²/g to 400 m²/g, and more particularly 150 m²/g to 300 m²/g. In the case in which the BET specific surface area satisfies the above range, proper dispersion of the multi-walled carbon nanotube units may be possible to maintain manufacturing processability, and the formation of the conductive network may be maximized even with a small amount of the conductive agent. The BET specific surface area may be measured by a nitrogen adsorption BET method.

The multi-walled carbon nanotube units may have an average length of 0.1 um to 100 um, particularly 0.1 um to 50 µm, and more particularly 0.1 um to 3 um. The proper dispersion of the multi-walled carbon nanotube units may be possible and the use of the electrode slurry having a high solid content during the preparation of the electrode may be possible to maintain the manufacturing processability. Also, the formation of the conductive network may be maximized even with the small amount of the conductive agent. The average length corresponds to an average value of lengths of top 100 multi-walled carbon nanotube units having a long length and bottom 100 multi-walled carbon nanotube units having a short length in the electrode, which is observed by means of an SEM or TEM.

The multi-walled carbon nanotube units may be contained in the electrode active material layer in an amount of 0.1 wt% to 1.0 wt%, particularly 0.2 wt% to 0.9 wt%, and more particularly 0.3 wt% to 0.8 wt%. In the case in which the above range is satisfied, dispersibility and stability of the multi-walled carbon nanotube units is enhanced as well as the conductive network in the electrode may be smoothly formed, and thus input/output characteristics and high-temperature life characteristics of the battery may be improved.

### (2) Carbon Nanotube Structures

In the carbon nanotube structures, 2 to 5,000 single-walled carbon nanotube units are bonded side by side to each other. More particularly, in consideration of durability and conductive network of the electrode, it is preferable that 2 to 4,500, more preferably 50 to 4,000, and most preferably 1,000 to 4,000 single-walled carbon nanotube units are bonded to each other.

In the carbon nanotube structures, the single-walled carbon nanotube units are arranged side by side and bonded (cylindrical structure in which long axes of the units are bonded in parallel with each other to have flexibility) to form the carbon nanotube structures. The carbon nanotube structures may be connected to each other to form a network structure in the electrode.

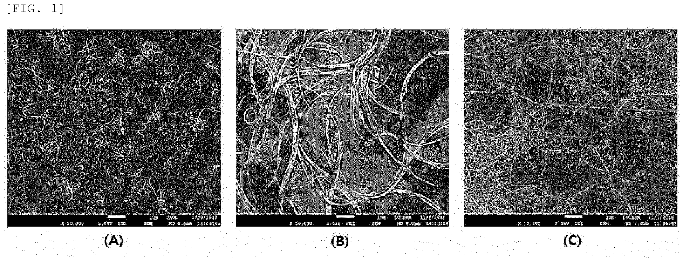

Conventional electrodes including carbon nanotubes are generally prepared by dispersing bundle-type or entangled-type carbon nanotubes (form in which single-walled carbon nanotube units or multi-walled carbon nanotube units are attached to each other or intertwined) in a dispersion medium to prepare a conductive agent dispersion and then using the conductive agent dispersion. In this case, the carbon nanotubes are completely dispersed in the conventional conductive agent dispersion to exist as a conductive agent dispersion in which carbon nanotube units in the form of a single strand are dispersed. In the conventional conductive agent dispersion, the carbon nanotube units are easily cut by an excessive dispersion process so that the carbon nanotube units have a length shorter than an initial length. Also, the carbon nanotube units may be easily cut in a rolling process of the electrode, and an additional limitation occurs in which the carbon nanotube units (particularly, single-walled carbon nanotube units) are cut or the surface thereof is damaged by an excessive volume change of the electrode active material during operation of the battery. Accordingly, since the conductivity of the electrode is deteriorated, there is a limitation in that the input/output characteristics and high-temperature life characteristics of the battery are deteriorated. Furthermore, with respect to the multi-walled carbon nanotube unit, structural defects are high due to a mechanism of node growth (not a smooth linear shape, but nodes are present due to defects generated during a growth process). Thus, during the dispersion process, the multi-walled carbon nanotube units are more easily cut (see (A) of FIG. 1), and the short-cut multi-walled carbon nanotube units are likely to be aggregated with each other via π-π stacking based on the carbon surface bond structure (sp2) of the unit. Accordingly, it is difficult for the multi-walled carbon nanotube units to be more uniformly dispersed and present in an electrode slurry.

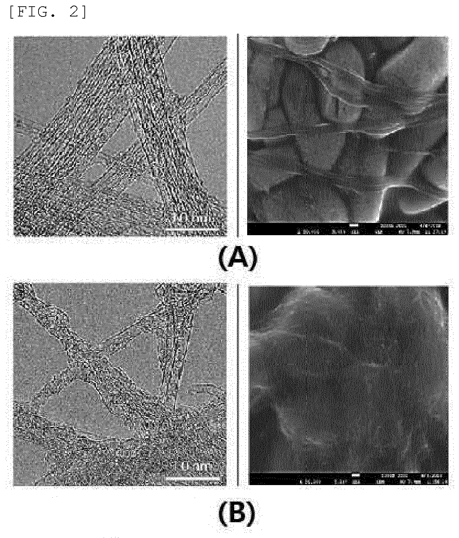

Alternatively, with respect to the carbon nanotube structures included in the electrode of the present invention, since they are in the form of a rope in which 2 to 5,000 single-walled carbon nanotube units, which maintain high crystallinity relatively without structural defects, are arranged and bonded side by side to each other (see (B) and (C) of FIG. 1, and (A) of FIG. 2), their lengths may be well maintained without being cut even by the volume change of the electrode active material, and thus, the conductivity of the electrode may be maintained even in a sustained charge and discharge process of the electrode. Also, since the conductivity of the electrode is increased due to high electrical conductivity of the single-walled carbon nanotube unit having high crystallinity, the input/output characteristics and high-temperature life characteristics of the battery may be significantly improved. Furthermore, since the carbon nanotube structures may be connected to each other to have a network structure in the electrode, occurrence of cracks may be prevented by suppressing the excessive volume change of the electrode active material and, simultaneously, a strong conductive network may be secured. Also, even if cracks occur in the electrode active material, since the carbon nanotube structures connect the electrode active material while crossing the crack, the conductive network may be maintained. Furthermore, since the carbon nanotube structures are not easily broken and may maintain their long shape, the conductive network may be strengthened throughout the electrode active material layer. Also, exfoliation of the electrode active material may be suppressed to significantly improve electrode adhesion.

In particular, in view of the combined use with the multi-walled carbon nanotube units, if the multi-walled carbon nanotube units are disposed primarily on the surface of the electrode active material to contribute to securing the conductivity of the short length, the carbon nanotube structures may contribute to securing the conductivity of the long length by means of the long length and network structure. Therefore, a uniform conductive network may be formed throughout the electrode active material layer.

In the carbon nanotube structures, the single-walled carbon nanotube units may have an average diameter of 0.5 nm to 5 nm, and particularly, 1 nm to 5 nm. In the case in which the average diameter is satisfied, there is an effect of maximizing the conductivity in the electrode even with an extremely small amount of the conductive agent. The average diameter corresponds to an average value of diameters of top 100 single-walled carbon nanotube units having a large diameter and bottom 100 single-walled carbon nanotube units having a small diameter when the manufactured electrode is observed by means of a TEM.

In the carbon nanotube structures, the single-walled carbon nanotube units may have an average length of 1 um to 100 µm, and particularly, 5 um to 50 um. In the case in which the average length is satisfied, since a long conductive path for conductive connection between the electrode active material particles may be formed and a unique network structure may be formed, there is an effect of maximizing the conductivity in the electrode even with an extremely small amount of the conductive agent. The average length corresponds to an average value of lengths of top 100 single-walled carbon nanotube units having a long length and bottom 100 single-walled carbon nanotube units having a short length when the manufactured electrode is observed by means of a TEM.

The single-walled carbon nanotube units may have a specific surface area of 500 m²/g to 1,000 m²/g, and particularly, 600 m²/g to 800 m²/g. When the above range is satisfied, since the conductive path in the electrode may be smoothly secured due to the large specific surface area, there is an effect of maximizing the conductivity in the electrode even with an extremely small amount of the conductive agent. The specific surface area of the single-walled carbon nanotube units may be calculated from a nitrogen gas adsorption amount at a liquid nitrogen temperature (77K) using BELSORP-mini II by Bell Japan Inc.

The carbon nanotube structures may have an average diameter of 2 nm to 200 nm, particularly 5 nm to 150 nm, and more particularly 50 nm to 120 nm. When the above range is satisfied, since it is effective in forming the conductive network structure and is advantageous for the connection between the active material particles, excellent electrical conductivity may be achieved. The average diameter corresponds to an average value of diameters of top 100 carbon nanotube structures having a large diameter and bottom 100 carbon nanotube structures having a small diameter when the manufactured electrode is observed by means of an SEM.

The carbon nanotube structures may have an average length of 1 um to 500 um, particularly 5 um to 100 µm, and more particularly 10 um to 70 um. When the above range is satisfied, since it is effective in forming the conductive network structure and is advantageous for the connection between the electrode active material particles, excellent electrical conductivity may be achieved. The average length corresponds to an average value of lengths of top 100 carbon nanotube structures having a long length and bottom 100 carbon nanotube structures having a short length when the manufactured electrode is observed by means of an SEM.

The carbon nanotube structures are contained in the electrode active material layer in an amount of 0.01 wt% to 0.5 wt%, preferably 0.01 wt% to 0.15 wt%, and more preferably 0.01 wt% to 0.1 wt%. When the above range is satisfied, since the conductive path of the electrode may be secured, the life characteristics of the battery may be improved while the electrode resistance is maintained at a low level. In the case in which the bundle-type carbon nanotubes are completely dispersed (as a general dispersion method, dispersion is performed so that single strands of the carbon nanotube units are separated from each other as much as possible) during the preparation of the conductive agent dispersion, the carbon nanotube structure is not formed, or, even if the carbon nanotube structure is formed unintentionally, the carbon nanotube structure is formed in a very small amount (e.g., 0.0005 wt%). That is, the above amount range may never be achieved by a general method. Since the carbon nanotube structures have a form in which 2 to 5,000 single-walled carbon nanotube units are arranged and bonded side by side to each other, the carbon nanotube structures may not be cut and well maintained in length even by the volume change of the electrode active material. Thus, the conductivity of the electrode may be maintained and the conductivity of the electrode may be smoothly secured due to the high conductivity of the single-walled carbon nanotube units. Accordingly, the input/output characteristics and high-temperature life characteristics of the battery may be excellent even if the content of the carbon nanotube structure in the electrode is low.

In some cases, the single-walled carbon nanotube units may be surface-treated by an oxidation treatment or nitridation treatment in order to improve affinity with a dispersant.

A weight ratio of the multi-walled carbon nanotube units to the carbon nanotube structures may be in a range of 100:1 to 100:200, particularly 100:2 to 100:100, and more particularly 100:5 to 100:50. In the case in which the above range is satisfied, the content of the conductive agent for a proper level of the conductivity may be reduced as well as a solid content of the electrode slurry increases. In addition, electrical conductivity and adhesion of the electrode may be simultaneously improved, and thus the input/output characteristics and high-temperature life characteristics of the battery may be significantly improved.

The electrode active material layer may further include a binder. The binder is to secure adhesion between the electrode active material particles or between the electrode active material and the current collector, wherein common binders used in the art may be used, and a type thereof is not particularly limited. The binder, for example, may include a polyvinylidene fluoride-hexafluoropropylene copolymer (PVDF-co-HFP), polyvinyl alcohol, polyacrylonitrile, starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, carboxymethyl cellulose (CMC), a styrene-butadiene rubber (SBR), a fluoro rubber, or various copolymers thereof, and one alone or a mixture of two or more thereof may be used.

The binder may be included in an amount of 10 wt% or less, for example, 0.1 wt% to 5 wt% based on a total weight of the electrode active material layer. In the case in which the content of the binder satisfies the above range, excellent electrode adhesion may be achieved while minimizing an increase in resistance of the electrode.

The electrode active material layer may further include at least any one among polyvinylidene fluoride and a hydrogenated nitrile butadiene rubber. The polyvinylidene fluoride and the hydrogenated nitrile butadiene rubber serve to help the dispersion of bundle-type or entangled-type single-walled carbon nanotubes or bundle-type or entangled-type multi-walled carbon nanotubes in the conductive agent dispersion used in the manufacture of the electrode, and may be contained in the electrode as the electrode slurry is prepared in the conductive agent dispersion.

### Method for Manufacturing Electrode

Next, a method for manufacturing an electrode of the present invention will be described.

The method for manufacturing the electrode of the present invention may include the steps of preparing a multi-walled carbon nanotube unit dispersion and a carbon nanotube structure dispersion (S1), and forming an electrode slurry including the multi-walled carbon nanotube unit dispersion, the carbon nanotube structure dispersion, and an electrode active material (S2).

### (1) Step for Preparing Multi-walled Carbon Nanotube Unit Dispersion and Carbon Nanotube Structure Dispersion (S1)

### 1) Preparation of Multi-walled Carbon Nanotube Unit Dispersion

The multi-walled carbon nanotube unit dispersion may be prepared by a method in which a mixed solution containing bundle-type or entangled-type multi-walled carbon nanotubes (a bonded body or an aggregate of single-walled carbon nanotubes), a dispersion medium, and a dispersant is prepared, and then the bundle-type or entangled-type multi-walled carbon nanotubes are completely dispersed (multi-walled carbon nanotube units are dispersed in a single strand) by means of a method such as a homogenizer, a bead mill, a ball mill, a basket mill, an attrition mill, a universal stirrer, a clear mixer, a spike mill, a TK mixer, and an ultrasonic dispersion. The dispersion medium and the dispersant may be the same as those used in the preparation of the carbon nanotube structure dispersion which will be described below, and thus will be described below.

### 2) Preparation of Carbon Nanotube Structure Dispersion

The preparation of the carbon nanotube structure dispersion may include the steps of preparing a mixed solution containing a dispersion medium, a dispersant, and bundle-type single-walled carbon nanotubes (a bonded body or an aggregate of single-walled carbon nanotubes) (S1-1); and dispersing the bundle-type single-walled carbon nanotubes by applying a shear force to the mixed solution to form carbon nanotube structures in which 2 to 5,000 single-walled carbon nanotube units are bonded side by side (S1-2).

In the step S1-1, the mixed solution may be prepared by adding the bundle-type single-walled carbon nanotubes and the dispersant to the dispersion medium. In the bundle-type single-walled carbon nanotube, the above-described single-walled carbon nanotube units are bonded to be present in the form of a bundle, wherein the bundle-type single-walled carbon nanotube includes usually 2 or more, substantially 500 or more, for example, 5,000 or more single-walled carbon nanotube units.

The bundle-type single-walled carbon nanotube may have a specific surface area of 500 m²/g to 1,000 m²/g, and particularly, 600 m²/g to 800 m²/g. When the above range is satisfied, since the conductive path in the electrode may be smoothly secured due to the large specific surface area, there is an effect of maximizing the conductivity in the electrode even with a very small amount of the conductive agent.

The bundle-type single-walled carbon nanotubes may be included in an amount of 0.1 wt% to 1.0 wt%, for example, 0.2 wt% to 0.5 wt% in the mixed solution. When the above range is satisfied, since the bundle-type single-walled carbon nanotubes are dispersed in an appropriate level, an appropriate level of the carbon nanotube structure may be formed, and dispersion stability may be improved.

The dispersion medium may include, for example, amide-based polar organic solvents such as dimethylformamide (DMF), diethyl formamide, dimethyl acetamide (DMAc), and N-methyl pyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol mono methyl ether, diethylene glycol mono methyl ether, triethylene glycol mono methyl ether, tetra ethylene glycol mono methyl ether, ethylene glycol mono ethyl ether, diethylene glycol mono ethyl ether, triethylene glycol mono ethyl ether, tetra ethylene glycol mono ethyl ether, ethylene glycol mono butyl ether, diethylene glycol mono butyl ether, triethylene glycol mono butyl ether, or tetra ethylene glycol mono butyl ether; ketones such as acetone, methyl ethyl ketone, methylpropyl ketone, or cyclopentanone; and esters such as ethyl acetate, γ-butyl lactone, and ε-propiolactone, and any one thereof or a mixture of two or more thereof may be used, but is not limited thereto. More specifically, the dispersion medium may be N-methyl pyrrolidone (NMP).

The dispersant may include at least any one among a hydrogenated nitrile butadiene rubber, polyvinylidene fluoride, and carboxymethyl cellulose, and particularly a hydrogenated nitrile butadiene rubber or polyvinylidene fluoride.

A weight ratio of the bundle-type carbon nanotubes to the dispersant in the conductive agent dispersion may be in a range of 1:0.1 to 1:7, and particularly, 1:1 to 1:6. In the case in which the above range is satisfied, since the bundle-type single-walled carbon nanotubes are dispersed in an appropriate level, an appropriate level of the carbon nanotube structure may be formed, and the dispersion stability may be improved.

A solid content in the mixed solution may be in a range of 0.1 wt% to 20 wt%, and particularly, 1 wt% to 10 wt%. In a case in which the above range is satisfied, since the bundle-type single-walled carbon nanotubes are dispersed in an appropriate level, an appropriate level of the carbon nanotube structure may be formed, and the dispersion stability may be improved. Also, the electrode slurry may have viscosity and elasticity that are suitable for an electrode preparation process, and it also contributes to an increase in the solid content of the electrode slurry.

In the step S1-2, a process for dispersing the bundle-type carbon nanotubes in the mixed solution may be performed by using a mixing device such as a homogenizer, a bead mill, a ball mill, a basket mill, an attrition mill, a universal stirrer, a clear mixer, a spike mill, a TK mixer, or an ultrasonic dispersion (sonification) equipment. Among these, a bead mill method is preferable in that the diameter size of the carbon nanotube structures can be controlled, the uniform distribution of the carbon nanotube structures may be achieved, and there is an advantage in costs.

The bead mill method may be as follows. The mixed solution is added to a container containing beads, the container is rotated, and thus the bundle-type single-walled carbon nanotubes may be dispersed.

In this case, conditions in which the bead mill method is performed are as follows.

An average diameter of the beads may be 0.5 mm to 1.5 mm, and particularly, 0.5 mm to 1.0 mm. In the case in which the range is satisfied, during the dispersing process, the carbon nanotube structure is not broken and the diameter thereof can be appropriately controlled, and a dispersion solution having a uniform composition may be prepared.

The revolution speed of the container may be 500 RPM to 10,000 RPM, and particularly 2,000 RPM to 6,000 RPM. In the case in which the range is satisfied, during the dispersing process, the carbon nanotube structure is not broken and the diameter thereof can be appropriately controlled, and a dispersion solution having a uniform composition may be prepared.

The time for performing the bead mill may be 0.5 hours to 2 hours, particularly, 0.5 hours to 1.5 hours, and more particularly, 0.8 hours to 1 hours. In the case in which the range is satisfied, during the dispersing process, the carbon nanotube structure is not broken and the diameter thereof can be appropriately controlled, and a dispersion solution having a uniform composition may be prepared. The time for performing the bead mill means a total time of using the bead mill, and for example, if the bead mill is performed several times, it means the total time taken over the several times.

The bead mill conditions are for appropriately dispersing the bundle-type single-walled carbon nanotubes, and particularly, except where the bundle-type carbon single-walled nanotubes are completely dispersed into a strand of the single-walled carbon nanotubes. That is, the bead mill conditions are for appropriately dispersing the bundle-type single-walled carbon nanotubes to form the carbon nanotube structure in which 2 to 5,000 single-walled carbon nanotube units are bonded side by side to each other in the prepared conductive agent dispersion. This may be achieved only in the case where a composition of the mixed solution, the dispersion (e.g., the bead mill) process conditions, etc. are strictly controlled.

Through the process, the carbon nanotube structures dispersion may be formed.

### (2) Step for Forming Electrode Slurry Including Multi-walled Carbon Nanotube Unit Dispersion, Carbon Nanotube Structure Dispersion, and Electrode Active Material (S2)

Through the process as above, when the multi-walled carbon nanotube unit dispersion and the carbon nanotube structure dispersion are prepared, an electrode slurry including the dispersions and an electrode active material is formed. In this case, the above-described electrode active materials may be used as the electrode active material.

In this case, the electrode active material may be first mixed with the carbon nanotube structure dispersion, and then the multi-walled carbon nanotube unit dispersion may be added. If mixed in reverse order, the carbon nanotube structures are not appropriately dispersed by a π-π bond, the electrode active materials are not connected to each other, the carbon nanotube structures are aggregated to each other, and thus the conductive network of the electrode cannot be formed effectively.

In addition, a binder and a solvent may be further included in the electrode slurry as needed. In this case, the binder of the above-described embodiment may be used as the binder. The solvent, for example, may include amide-based polar organic solvents such as dimethylformamide (DMF), diethyl formamide, dimethyl acetamide (DMAc), and N-methyl pyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol mono methyl ether, diethylene glycol mono methyl ether, triethylene glycol mono methyl ether, tetra ethylene glycol mono methyl ether, ethylene glycol mono ethyl ether, diethylene glycol mono ethyl ether, triethylene glycol mono ethyl ether, tetra ethylene glycol mono ethyl ether, ethylene glycol mono butyl ether, diethylene glycol mono butyl ether, triethylene glycol mono butyl ether, or tetra ethylene glycol mono butyl ether; ketones such as acetone, methyl ethyl ketone, methylpropyl ketone, or cyclopentanone; and esters such as ethyl acetate, γ-butyl lactone, and ε-propiolactone, and any one thereof or a mixture of two or more thereof may be used, but the present invention is not limited thereto. The solvent may be the same or different from the dispersion medium used in the predispersion, and may preferably be N-methyl pyrrolidone (NMP).

Next, the electrode slurry prepared as described above is dried to form an electrode active material layer. Specifically, the electrode active material layer may be formed by a method of coating the electrode slurry on an electrode collector and then drying the coated collector, or may be formed by a method of coating the electrode slurry on a separate support and then laminating, on the collector, a film separated from the support. If necessary, after the electrode active material layer is formed by the above-described method, a rolling process may be further performed. In this case, the drying and rolling may be performed under appropriate conditions in consideration of physical properties of the electrode to be finally prepared, and are not particularly limited.

### SECONDARY BATTERY

A secondary battery according to another embodiment of the present invention may include a negative electrode, a positive electrode, a separator disposed between the positive electrode and the negative electrode, and an electrolyte, and at least one among the positive electrode and the negative electrode is the above-described electrode of the invention. More specifically, the above-described electrode may be the positive electrode.

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and the separator having a single layer or multilayer structure may be selectively used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but is not limited thereto.

Specifically, the electrolyte may include a non-aqueous organic solvent and a metal salt.

For example, aprotic organic solvents such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate may be used as the non-aqueous organic solvent.

In particular, ethylene carbonate and propylene carbonate, as ring-type carbonates among the carbonate-based organic solvents, well dissociate a lithium salt in the electrolyte solution due to high dielectric constants as high-viscosity organic solvents, and thus, the ring-type carbonate may be preferably used. Since an electrolyte solution having high electrical conductivity may be prepared when the ring-type carbonate is mixed with low-viscosity, low-dielectric constant linear carbonate, such as dimethyl carbonate and diethyl carbonate, in an appropriate ratio, the ring-type carbonate may be more preferably used.

A lithium salt may be used as the metal salt, and the lithium salt is a material that is readily soluble in the non-aqueous electrolyte solution, wherein, for example, one selected from the group consisting of F⁻, Cl-, I-, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN-, and (CF₃CF₂SO₂)₂N⁻ may be used as an anion of the lithium salt.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components.

A battery module including the secondary battery as a unit cell and a battery pack including the battery module may be provided. Since the battery module and the battery pack include the secondary battery having high capacity, high rate characteristics, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, the present invention will be described in more detail with reference to specific Examples and Comparative Examples.

### Preparation Example 1: Preparation of Multi-walled Carbon Nanotube Unit Dispersion

Bundle-type multi-walled carbon nanotubes, a hydrogenated nitrile butadiene rubber (H-NBR) as a dispersant, and N-methylpyrrolidone (NMP) as a dispersion medium were mixed at a weight ratio of 4:0.8:95.2 to form a mixture. The mixture was added to a spike mill, in which 80% was filled with beads having a diameter of 0.65 mm, dispersed, and discharged at a discharge rate of 2 kg/min. This process was performed twice, and the bundle-type multi-walled carbon nanotubes were completely dispersed to prepare a multi-walled carbon nanotube unit dispersion.

### Preparation Example 2: Preparation of Carbon Nanotube Structure Dispersion

Bundle-type single-walled carbon nanotubes (having a specific surface area of 650 m²/g) composed of single-walled carbon nanotube units having an average diameter of 1.5 nm and an average length of 5 um or longer and polyvinylidene fluoride (PVDF, KF9700, weight-average molecular weight: 880,000 g/mol) were mixed in N-methyl pyrrolidone (NMP) that is a solvent to prepare a mixture so that a solid content was 2.4 wt%.

The mixture was stirred in a bead-mill method, and thus the bundle-type single-walled carbon nanotubes were dispersed in the solvent to prepare a carbon nanotube structure dispersion. In this case, the diameter of the beads was 1 mm, the revolution speed of the agitation container containing the beads was 3,000 RPM, and the stirring was performed for 60 minutes. The carbon nanotube structure dispersion included carbon nanotube structures having a form in which 2 to 5,000 single-walled carbon nanotube units were bonded side by side (see (A) of FIG. 2).

In the carbon nanotube structure dispersion, an amount of the carbon nanotube structures was 0.4 wt%, and an amount of the polyvinylidene fluoride was 2.0 wt%.

### Preparation Example 3: Preparation of Carbon Black Dispersion

A carbon black having a specific surface area of 240 m²/g (secondary particle form composed of primary particles having an average diameter of 25 nm) and hydrogenated nitrile butadiene rubbers (weight average molecular weight: 260,000 g/mol) were mixed with N-methylpyrrolidone (NMP) that is a solvent to prepare a mixture so that a solid content was 16.5 wt%.

The mixture was stirred in a bead-mill method, and the carbon black was dispersed in the solvent to prepare a carbon black dispersion. In this case, the diameter of the beads was 1 mm, the revolution speed of the agitation container containing the beads was 3,000 RPM, and the stirring was performed for 60 minutes.

In the carbon black dispersion, an amount of the carbon black was 15 wt%, and an amount of the hydrogenated nitrile butadiene rubbers was 1.5 wt%.

### Preparation Example 4: Preparation of Single-walled Carbon Nanotube Unit Dispersion

Bundle-type single-walled carbon nanotubes (having a specific surface area of 650 m²/g) composed of single-walled carbon nanotube units having an average diameter of 1.5 nm and an average length of 5 um or longer and hydrogenated nitrile butadiene rubbers (weight-average molecular weight: 260,000 g/mol) were mixed in N-methyl pyrrolidone (NMP) that is a solvent to prepare a mixture so that a solid content was 4.4 wt% (an amount of bundle-type carbon nanotube was 0.4 wt% and an amount of hydrogenated nitrile butadiene rubbers was 4.0 wt%).

The mixture was stirred in a bead-mill method, and thus the bundle-type single-walled carbon nanotubes were dispersed in the solvent to prepare a conductive agent dispersion. In this case, the particle diameter of the beads was 1 mm, and the revolution speed of the agitation container containing the beads was 3,000 RPM. When one cycle was performing the stirring for 60 minutes in the above conditions, the stirring was performed for a total of four cycles (60 minutes natural cooling between each cycle). Thus, a single-walled carbon nanotube unit dispersion was prepared (see (B) of FIG. 2). In the dispersion, the bundle-type single-walled carbon nanotubes were completely dispersed for the single-walled carbon nanotube units to be present in a single strand, but the above-described carbon nanotube structure was not detected. In addition, in the single-walled carbon nanotube unit dispersion, an amount of the carbon nanotube structures was 0.4 wt%, and an amount of the hydrogenated nitrile butadiene rubbers was 4.0 wt%.

### Examples and Comparative Examples

### Example 1: Manufacture of Positive Electrode

The multi-walled carbon nanotube unit dispersion of Preparation Example 1, the carbon nanotube structure dispersion of Preparation Example 2, Li [Ni_{0.6}Co_{0.2}Mn_{0.2}]O₂ (NCM622) as a positive electrode active material, and a binder (PVDF, KF9700) were mixed with N-methyl pyrrolidone (NMP) to prepare a positive electrode slurry having a solid content of 70.4%. The positive electrode slurry was coated on an Al thin film current collector having a thickness of 20 µm, dried at 130 °C, and rolled to prepare a positive electrode including a positive electrode active material layer.

In the positive electrode active material layer, the LiNi_{0.6}Co_{0.2}Mn_{0.2}O₂ (NCM622) is contained in an amount of 97.5 wt%, the binder is contained in an amount of 1.67 wt%, the hydrogenated nitrile butadiene rubber is contained in an amount of 0.13 wt%, the multi-walled carbon nanotube units are contained in an amount of 0.65 wt%, and the carbon nanotube structures are contained in an amount of 0.05 wt%.

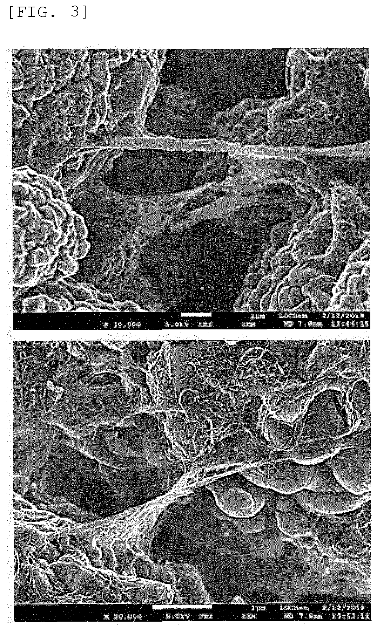

Referring to FIG. 3, it may be seen that in the positive electrode of Example 1, carbon nanotube structures in a rope form are formed long to make a network structure and connect NCM622 to each other.

### Example 2: Manufacture of Positive Electrode

A positive electrode was manufactured in the same manner as in Example 1 except that a different amount of the multi-walled carbon nanotube unit dispersion of Preparation Example 1 and the carbon nanotube structure dispersion of Preparation Example 2 was used, and thus in the final positive electrode, the multi-walled carbon nanotube units were contained in an amount of 0.6 wt% and the carbon nanotube structures were contained in an amount of 0.1 wt%.

### Comparative Example 1 Manufacture of Positive Electrode

A positive electrode was manufactured in the same manner as in Example 1 except that the carbon black dispersion of Preparation Example 3 was used instead of the multi-walled carbon nanotube unit dispersion of Preparation Example 1 and the carbon nanotube structure dispersion of Preparation Example 2.

### Comparative Example 2 Manufacture of Positive Electrode

A positive electrode was manufactured in the same manner as in Example 1 except that the carbon nanotube structure dispersion of Preparation Example 2 was not used, and the multi-walled carbon nanotube unit dispersion of Preparation Example 1 was used in the same amount as the carbon nanotube structure dispersion (using only the multi-walled carbon nanotube unit dispersion of Preparation Example 1) .

### Comparative Example 3 Manufacture of Positive Electrode

A positive electrode was manufactured in the same manner as in Example 1 except that the multi-walled carbon nanotube unit dispersion of Preparation Example 1 was not used, and the carbon nanotube structure dispersion of Preparation Example 2 was used in the same amount as the multi-walled carbon nanotube unit dispersion (using only the carbon nanotube structure dispersion of Preparation Example 2) .

### Comparative Example 4 Manufacture of Positive Electrode

A positive electrode was manufactured in the same manner as in Example 1 except that the single-walled carbon nanotube unit dispersion of Preparation Example 4 was used instead of the carbon nanotube structure dispersion of Preparation Example 2.

**[Table 1]**

| | Multi-walled carbon nanotube unit content (wt%) | Carbon nanotube structure content (wt%) | Single-walled carbon nanotube unit (in a completely dispersed form) content (wt%) | Carbon black content (wt%) | Average diameter (nm) of carbon nanotube structure |
|---|---|---|---|---|---|
| Example 1 | 0.65 | 0.05 | - | - | 100 |
| Example 2 | 0.6 | 0.1 | - | - | 100 |
| Comparative Example 1 | - | - | - | 0.7 | - |
| Comparative Example 2 | 0.7 | - | - | - | - |
| Comparative Example 3 | - | 0.7 | - | - | 100 |
| Comparative Example 4 | 0.65 | - | 0.05 | - | - |

In Example 1, Example 2, and Comparative Example 3 above, the carbon nanotube structures have an average diameter of 100 nm and an average length of 15.6 um. In Examples and Comparative Examples above, the multi-walled carbon nanotube units have an average diameter of 10.8 nm and an average length of 1.3 um. In Comparative Example 4 above, the single-walled carbon nanotube units have an average diameter of 1.6 nm and an average length of 1.8 um.

The average diameter and the average length correspond to an average value of diameters and lengths of top 100 carbon nanotube structures (or multi-walled carbon nanotube units, or single-walled carbon nanotube units) having a large diameter (or a long length) and bottom 100 carbon nanotube structures (or multi-walled carbon nanotube units, or single-walled carbon nanotube units) having a small diameter (or a short length) when the manufactured electrodes were observed through a TEM.

### Experimental Example 1: Observation of Positive Electrode

The positive electrode active material layers of the positive electrodes of Examples 1 and Comparative Example 2 were observed through a scanning electron microscope.

Referring to FIG. 3, in Example 1, it may be seen that the carbon nanotube structures in a form of a long rope with flexibility (a form in which 2 to 5,000 single-walled carbon nanotube units were arranged side by side to each other and bonded) and the multi-walled carbon nanotube units formed a conductive network well in the positive electrode active material layer.

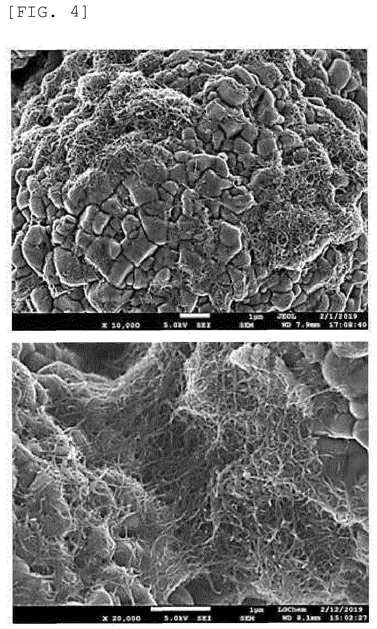

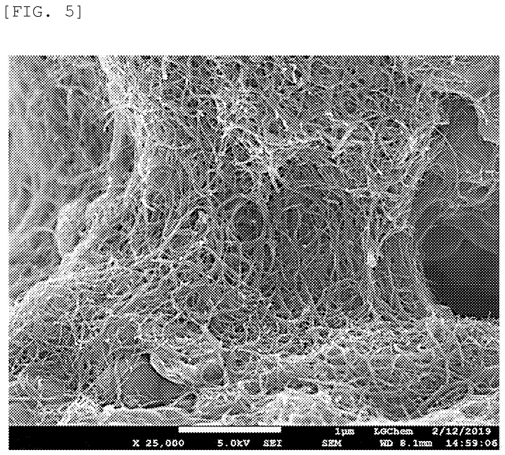

In contrast, referring to FIG. 4, only the multi-walled carbon nanotube units were formed in a short length, and the carbon nanotube structure in the form of a long rope with flexibility as in Example 1 was not observed. In addition, referring to FIG. 5, only the multi-walled carbon nanotube units and the single-walled carbon nanotube units were observed, but the carbon nanotube structure in the form of a long rope was not observed.

### Experimental Example 2: Evaluation of Input/Output Characteristics of Battery

Batteries were respectively prepared as follows by using the positive electrodes of Examples 1 to 2 and Comparative Examples 1 to 4.

Artificial graphite as a negative electrode active material, carbon black as a negative electrode conductive agent, a styrene-butadiene rubber (SBR) as a negative electrode binder, and carboxymethyl cellulose (CMC) were mixed in distilled water at a weight ratio of 96.1:0.5:2.3:1.1 to prepare a negative electrode slurry. A 20 um thick negative electrode collector (Cu) was coated with the prepared slurry so that a loading amount was 10 mg/cm2 and dried. Thereafter, the negative electrode collector on which the negative electrode slurry was disposed was rolled by a roll rolling method such that a total thickness of the negative electrode slurry and the negative electrode collector was 80 um. Thereafter, the negative electrode slurry and the negative electrode collector were dried at 110 °C for 6 hours to prepare a negative electrode.

Thereafter, a mono-cell was prepared by combining the above-prepared negative electrode and the above-described positive electrode with a 15 um thick polyethylene-based separator disposed therebetween, and then an electrolyte solution (ethylene carbonate (EC)/ethylmethyl carbonate (EMC) = 1/2 (volume ratio)) and lithium hexafluorophosphate (1 M LiPF₆) were injected into the mono-cell to prepare a lithium secondary battery.

Thereafter, input/output characteristics were evaluated as follows and then the results are shown in Table 2.

The lithium secondary battery was charged/discharged at 0.33 C/0.33 C at 25 °C in a voltage range of 4.25 V to 2.8 V, and then again, was fully charged at 0.33 C to 4.25 V and discharged at 0.33 C, and was set at SOC (state of charge) 35% (SOC 100% was set on the basis of 2.8 V discharge capacity). Thereafter, when the battery was continuously discharged at -10 °C at 0.4 C for 1,350 seconds, the resistance value against the voltage displacement was calculated.

### Experimental Example 3: Evaluation of High-temperature Life Characteristics of Battery

Secondary batteries were respectively prepared as follows by using the positive electrodes of Examples 1 to 2 and Comparative Examples 1 to 4.

When one cycle is that each lithium secondary battery is charged/discharged at 0.33 C/0.33 C at 45 °C in a voltage range of 4.25 V to 2.8 V, a total of 100 cycles was performed. Thereafter, discharge capacities (capacity retention rate) after 100 cycles were evaluated on the basis of discharge capacities after one cycle as 100%, and the results are shown in Table 2.

**[Table 2]**

| | Input/output characteristics: resistance (Ω) | Capacity retention (%) |
|---|---|---|
| Example 1 | 18.1 | 94.9 |
| Example 2 | 16.3 | 95.6 |
| Comparative Example 1 | 41.5 | 79.4 |
| Comparative Example 2 | 22.1 | 90.3 |
| Comparative Example 3 | 18.7 | 93.8 |
| Comparative Example 4 | 20.4 | 92.1 |

## Claims

1. An electrode comprising an electrode active material layer which comprises an electrode active material and a conductive agent, the conductive agent comprising
multi-walled carbon nanotube units, and
carbon nanotube structures in which 2 to 5,000 single-walled carbon nanotube units are arranged side by side and bonded to each other in each carbon nanotube structure,
wherein the carbon nanotube structures are contained in the electrode active material layer in an amount of 0.01 wt% to 0.5 wt%.

2. The electrode of claim 1, wherein the weight ratio of the multi-walled carbon nanotube units to the carbon nanotube structures is 100:1 to 100:200.

3. The electrode of claim 1, wherein the multi-walled carbon nanotube units are contained in the electrode active material layer in an amount of 0.1 wt% to 1.0 wt%.

4. The electrode of claim 1, wherein the carbon nanotube structures are connected to each other to form a network structure in the electrode.

5. The electrode of claim 1, wherein the carbon nanotube structures have an average length of 1 µm to 500 µm.

6. The electrode of claim 1, wherein the carbon nanotube structures have an average length of 10 µm to 70 um.

7. The electrode of claim 1, wherein the carbon nanotube structures have an average diameter of 2 nm to 200 nm.

8. The electrode of claim 1, wherein the carbon nanotube structures have an average diameter of 50 nm to 120 nm.

9. The electrode of claim 1, wherein, in the carbon nanotube structures, the single-walled carbon nanotube units have an average diameter of 0.5 nm to 5 nm.

10. The electrode of claim 1, wherein the multi-walled carbon nanotube units have an average diameter of 5 nm to 200 nm.

11. The electrode of claim 1, wherein the multi-walled carbon nanotube units have an average length of 0.1 um to 100 µm.

12. The electrode of claim 1, wherein the carbon nanotube structures are carbon nanotube structures in which 50 to 4,000 single-walled carbon nanotube units are arranged side by side and bonded to each other.

13. The electrode of claim 1, which is a positive electrode.

14. A secondary battery comprising an electrode as defined in any of claims 1 to 13.

## Patentansprüche

1. Elektrode, umfassend eine Elektroden-Aktivmaterialschicht, die ein Elektroden-Aktivmaterial und ein leitfähiges Mittel umfasst, wobei das leitfähige Mittel umfasst:
mehrwandige Kohlenstoffnanoröhrchen-Einheiten und
Kohlenstoffnanoröhrchen-Strukturen, worin 2 bis 5.000 einwandige Kohlenstoffnanoröhrchen-Einheiten nebeneinander angeordnet sind und in jeder Kohlenstoffnanoröhrchen-Struktur aneinander gebunden sind,
worin die Kohlenstoffnanoröhrchen-Strukturen in der Elektroden-Aktivmaterialschicht in einer Menge von 0,01 Gew.-% bis 0,5 Gew.-% enthalten sind.

2. Elektrode gemäß Anspruch 1, worin das Gewichtsverhältnis der mehrwandigen Kohlenstoffnanoröhrchen-Einheiten zu den Kohlenstoffnanoröhrchen-Strukturen 100:1 bis 100:200 beträgt.

3. Elektrode gemäß Anspruch 1, worin die mehrwandigen Kohlenstoffnanoröhrchen-Einheiten in der Elektroden-Aktivmaterialschicht in einer Menge von 0,1 Gew.-% bis 1,0 Gew.-% enthalten sind.

4. Elektrode gemäß Anspruch 1, worin die Kohlenstoffnanoröhrchen-Strukturen aneinander gebunden sind, um in der Elektrode eine Netzwerkstruktur zu bilden.

5. Elektrode gemäß Anspruch 1, worin die Kohlenstoffnanoröhrchen-Strukturen eine mittlere Länge von 1 µm bis 500 µm aufweisen.

6. Elektrode gemäß Anspruch 1, worin die Kohlenstoffnanoröhrchen-Strukturen eine mittlere Länge von 10 µm bis 70 µm aufweisen.

7. Elektrode gemäß Anspruch 1, worin die Kohlenstoffnanoröhrchen-Strukturen einen mittleren Durchmesser von 2 nm bis 200 nm aufweisen.

8. Elektrode gemäß Anspruch 1, worin die Kohlenstoffnanoröhrchen-Strukturen einen mittleren Durchmesser von 50 nm bis 120 nm aufweisen.

9. Elektrode gemäß Anspruch 1, worin in den Kohlenstoffnanoröhrchen-Strukturen die einwandigen Kohlenstoffnanoröhrchen-Einheiten einen mittleren Durchmesser von 0,5 nm bis 5 nm aufweisen.

10. Elektrode gemäß Anspruch 1, worin die mehrwandigen Kohlenstoffnanoröhrchen-Einheiten einen mittleren Durchmesser von 5 nm bis 200 nm aufweisen.

11. Elektrode gemäß Anspruch 1, worin die mehrwandigen Kohlenstoffnanoröhrchen-Einheiten eine mittlere Länge von 0,1 µm bis 100 µm aufweisen.

12. Elektrode gemäß Anspruch 1, worin die Kohlenstoffnanoröhrchen-Strukturen Kohlenstoffnanoröhrchen-Strukturen sind, worin 50 bis 4.000 einwandige Kohlenstoffnanoröhrchen-Einheiten nebeneinander angeordnet und aneinander gebunden sind.

13. Elektrode gemäß Anspruch 1, die eine positive Elektrode ist.

14. Sekundärbatterie, umfassend eine Elektrode gemäß irgendeinem der Ansprüche 1 bis 13.

## Revendications

1. Électrode comprenant une couche de matériau actif d'électrode qui comprend un matériau actif d'électrode et un agent conducteur, l'agent conducteur comprenant
des unités de nanotubes de carbone à parois multiples, et
des structures de nanotubes de carbone dans lesquelles 2 à 5 000 unités de nanotubes de carbone à paroi unique sont agencées côte à côte et liées les unes aux autres dans chaque structure de nanotubes de carbone,
dans laquelle les structures de nanotubes de carbone sont contenues dans la couche de matériau actif d'électrode en une quantité de 0,01 % en poids à 0,5 % en poids.

2. Électrode selon la revendication 1, dans laquelle le rapport en poids des unités de nanotubes de carbone à parois multiples aux structures de nanotubes de carbone est de 100:1 à 100:200.

3. Électrode selon la revendication 1, dans laquelle les unités de nanotubes de carbone à parois multiples sont contenues dans la couche de matériau actif d'électrode en une quantité de 0,1 % en poids à 1,0 % en poids.

4. Électrode selon la revendication 1, dans laquelle les structures de nanotubes de carbone sont reliées les unes aux autres pour former une structure de réseau dans l'électrode.

5. Électrode selon la revendication 1, dans laquelle les structures de nanotubes de carbone présentent une longueur moyenne de 1 µm à 500 µm.

6. Électrode selon la revendication 1, dans laquelle les structures de nanotubes de carbone présentent une longueur moyenne de 10 µm à 70 µm.

7. Électrode selon la revendication 1, dans laquelle les structures de nanotubes de carbone présentent un diamètre moyen de 2 nm à 200 nm.

8. Électrode selon la revendication 1, dans laquelle les structures de nanotubes de carbone présentent un diamètre moyen de 50 nm à 120 nm.

9. Électrode selon la revendication 1, dans laquelle, dans les structures de nanotubes de carbone, les unités de nanotubes de carbone à paroi unique présentent un diamètre moyen de 0,5 nm à 5 nm.

10. Électrode selon la revendication 1, dans laquelle les unités de nanotubes de carbone à parois multiples présentent un diamètre moyen de 5 nm à 200 nm.

11. Électrode selon la revendication 1, dans laquelle les unités de nanotubes de carbone à parois multiples présentent une longueur moyenne de 0,1 µm à 100 µm.

12. Électrode selon la revendication 1, dans laquelle les structures de nanotubes de carbone sont des structures de nanotubes de carbone dans lesquelles 50 à 4 000 unités de nanotubes de carbone à paroi unique sont agencées côte à côte et liées les unes aux autres.

13. Électrode selon la revendication 1, qui est une électrode positive.

14. Batterie secondaire comprenant une électrode selon l'une quelconque des revendications 1 à 13.
